(19) Europäisches Patentamt

European Patent Office

Office européen des brevets

(11) **EP 2 171 356 B1**

(12) **EUROPEAN PATENT SPECIFICATION**

(45) Date of publication and mention
of the grant of the patent:
**25.10.2017 Bulletin 2017/43**

(21) Application number: **08759647.4**

(22) Date of filing: **15.05.2008**

(51) Int Cl.:
*F23R 3/50* $^{(2006.01)}$      *F23D 14/20* $^{(2006.01)}$
*F23D 14/48* $^{(2006.01)}$      *F23D 14/58* $^{(2006.01)}$
*F23D 11/10* $^{(2006.01)}$      *F23D 11/38* $^{(2006.01)}$
*F23R 3/46* $^{(2006.01)}$

(86) International application number:
**PCT/EP2008/055992**

(87) International publication number:
**WO 2008/138971 (20.11.2008 Gazette 2008/47)**

(54) **COOL FLAME COMBUSTION**

VERBRENNUNG MIT KALTEN FLAMMEN

COMBUSTION À FLAMME FROIDE

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **15.05.2007 GB 0709350**

(43) Date of publication of application:
**07.04.2010 Bulletin 2010/14**

(73) Proprietor: **Ansaldo Energia Switzerland AG
5401 Baden (CH)**

(72) Inventor: **MINA, Theodore Ishaq
Whittlesey Cambridgeshire PE7 1SD / GB (GB)**

(74) Representative: **Bernotti, Andrea et al
Studio Torta S.p.A.
Via Viotti, 9
10121 Torino (IT)**

(56) References cited:
**WO-A-99/41548     US-A- 5 558 515
US-A- 5 927 076     US-B2- 6 928 823**

## Description

### Field of the Invention

Embodiments of the present invention generally relate to low pollution combustion processes, and in particular to combustion processes for gas turbine engines. However, the principles of the invention are also applicable to other combustion apparatus, such as steam raising boilers.

### Background of the Invention

All gas turbine engines employ some sort of fuel injector or burner to deliver a stream of fuel into the combustion chamber. In many cases, the burner will also deliver a stream of air for combustion of the fuel. Many prior art burners for gas turbine engines have supplied liquid fuels such as kerosene or diesel to their combustors, but burners have also been adapted to deliver one or more of a variety of other fuels including:

- gaseous fuels, such as natural gas ($CH_4$), coke oven gas (COG), medium calorific value (MCV) fuel, integrated gasification combined cycle (IGCC) high hydrogen gasification gas, and pure hydrogen;
- fuels containing fine particles of solid fuel such as coke dust, powdered or pulverised solid fuel in a gaseous stream (such as steam, nitrogen or air) to simulate a gaseous fuel;
- powdered or pulverised solid fuels in a liquid stream (such as water) to simulate a liquid fuel; or
- pre-vaporised conventional liquid fuels.

A problem that arises with burners in general is a build-up of carbon on the end of the fuel nozzle, or even ingress of combustion gases to the fuel system via the fuel nozzle. In some cases, a burner can deliver two different types of fuel into the combustion chamber at different times. For example, the burner may include a fuel nozzle that supplies a gaseous fuel (often the main fuel) and a pilot fuel nozzle that supplies a liquid fuel. The hot combustion products within the combustion chamber may particularly affect the fuel nozzle that is not being used; e.g., gaseous combustion products may enter the fuel supply path of the fuel nozzle, and/or solid combustion products such as carbon may be deposited on a fuel nozzle. Carbon deposition can even build up while fuel is being supplied through a nozzle.

To help prevent hot combustion products from damaging or blocking the fuel nozzle when it is not in use, it is normally necessary to purge the nozzle, e.g., by supplying a proportion of the compressor delivery air through it, for example. However, the need for positive forward purge of the fuel nozzle increases the complexity of the design of the gas turbine engine's fuel system and the burner.

The problem of climate change has received much attention in recent years, and when fossil fuels are burned to power gas turbine engines and boilers, carbon dioxide is of course produced by the combustion process. Therefore, combustion systems capable of safely and reliably burning hydrogen (or fuels with a high free hydrogen content) are required, in order to reduce CO2 emissions and the impact of climate change.

Allied with the above, an important concern in modern gas turbine engine combustor and burner design is to increase combustion efficiency and to reduce atmospheric pollution attributable to engine emissions. Mono nitrogen oxides (collectively known as "NOx", which contribute to the production of photochemical smog and acid rain, and in themselves are potent "greenhouse" gases) are produced during combustion of fuels in air at temperatures of the order of 1850 degrees Kelvin (1850K) or more, therefore most combustors generating low emissions operate with full load flame temperatures below 1900K. A common approach to achieving relatively low flame temperatures is to use the so-called "lean premix" combustion process, in which excess air and fuel are mixed together before reaching the flame zone to give a combustion process with a lean equivalence ratio and a full load flame temperature of the order of 1850K.

The equivalence ratio is defined as the ratio of the actual fuel/air ratio to the stoichiometric fuel/air ratio. Stoichiometric combustion occurs when all the oxygen is consumed in the reaction, and there is no molecular oxygen in the combustion products. Hence, if the equivalence ratio has a value of one, the combustion is stoichiometric. If it is less than one, the combustion is lean with excess air, and if it is greater than one, the combustion is rich, with incomplete combustion.

A problem with lean premix combustion processes is that as the load on the engine is reduced down to engine idle speeds, the fuel flow must also be reduced, and the fuel/air mixture tends to become leaner. The result of leaner mixtures is reduced combustion stability, leading to flame blow-out or combustion oscillations if the fuel flow is turned down too much relative to the air flow. A known way of at least partially overcoming this problem is to have pilot burners in the combustors that operate with diffusion flames at low loads, but of course, this expedient produces more emissions due to increased combustion temperatures in the diffusion flames. Alternatively, or additionally, the compressor can be provided with variable inlet guide vanes which act at low loads to reduce compressor delivery air flow to the burners, but this adds cost and complexity to the engine.

In aero gas turbine engines, one lean-burn concept currently being researched for liquid fuel can be classified as Lean Pre-mixed Pre-vaporised (LPP). The LPP concept has been shown to have pleasingly low NOx emissions, but the main disadvantage when used for hydrogen and other high flame speed fuels is the risk of flame flashback from the combustion chamber to the premixing chamber. The risk of auto-ignition may also be an issue with elevated combustion air temperatures associated with high pressure ratio engines and with reheat combustors (otherwise known as sequential combustors).

Another lean-burn concept currently being researched is Lean Direct Injection (LDI, sometimes referred to as "micro-diffusion"). The main difference from LPP is that instead of the fuel being premixed with the air before injection to the combustion chamber, it is injected directly into the flame zone. This means that there is no potential for flame flashback or auto-ignition. However, the lack of pre-mixing means that it is necessary for the fuel to be mixed quickly and uniformly with all the combustion air in the flame zone so that the flame temperature is low and the NOx formation levels are comparable to LPP. The LDI concept employs a large number of small flames. Each of the multiple fuel injectors has an air swirler associated with it to provide quick mixing and a small re-circulation zone for burning. The use of multipoint fuel injection provides quick, uniform mixing of the fuel and combustion air and the small multi-burning zones provide for reduced burning residence time, resulting in low NOx formation levels. See, e.g., NASA Report No. TM-2002-211347 "A Low NOx Lean-Direct Injection, Multipoint Integrated Module Combustor Concept for Advanced Aircraft Gas Turbines", by Robert Tacina, Glenn Research Center, Cleveland, Ohio, Changlie Wey, QSS Group, Inc., Cleveland, Ohio, and Peter Laing and Adel Mansour, Parker Hannifin, Andover, Ohio.

United States Patent No. 6,928,823 B2 A is another example of the prior art. This discloses a gas turbine combustor in which fuel and air are supplied into a combustion chamber as a plurality of coaxial jets. In one embodiment, the exit of each fuel supply nozzle is concentrically located just within the entrance of a cylindrical air supply nozzle, which corresponds to a premixing tube of a conventional premixing combustor. According to the description of US 6,928,823 B2, low NOx combustion equivalent to lean premixed combustion is achieved, together with reduced flashback potential, by producing coaxial jets in which the air flow envelopes the fuel, the fuel flows into the combustion chamber, mixes with an ambient coaxial air flow to become a premixed air fuel mixture having a proper stoichiometric mixture ratio, and then comes in contact with high-temperature gas and starts to burn. However, there is no disclosure of relative dimensions, velocity ratios, or momentum ratios, and some of the air delivered to the combustor is not only used to cool combustion chamber walls, but also passes into the chamber as dilution air.

US 6 928 823 discloses a combustor according to the pre-characterizing part of claim 1.

## Summary of the Invention

A method for burning fuel with air in a combustion chamber with low production of NOx emissions comprises the steps of:

supplying fuel and air to a burner associated with the combustion chamber, the amount of air supplied being at least as much as required for stoichiometric combustion of the fuel and all subsequent dilution of the combustion process in the combustion chamber; and

injecting the fuel and all the air through the burner directly into the combustion chamber in a substantially unmixed state as a fuel stream inside an air stream, burning fuel with the air in a diffusion flame, wherein the air is immediately available in the proximity of the flame during the combustion process to act as a heat sink, diluting the combustion process and continuing a post-flame reaction as a lean-burn reaction, wherein the fuel stream is injected with a thickness or diameter such that the fuel burns in the combustion chamber at or close to the stoichiometric fuel/air ratio as a diffusion flame with a high surface-to-volume ratio;

characterized in that the fuel and air streams are injected such that when leaving the burner, the ratio of the velocity of the air stream to the velocity of the fuel stream is greater than unity.

The amount of air supplied through the air supply nozzle is substantially in excess of the amount required for complete combustion, preferably between roughly 150% to roughly 250% of the amount required for complete combustion.

To facilitate low emissions without any substantial premixing of the fuel and air before combustion, the burners disclosed herein, on which the invention can be carried out, are intended to produce not only a small diffusion flame with a high flame surface-to-volume ratio in the combustion chamber, but also provide a sufficiently large mass of air adjacent the flame to act as an effective heat sink. The flame therefore loses heat rapidly to the adjacent air that issues from the air nozzle, leading to a low diffusion flame temperature, of the order of 1850K, or even less. Note also that sufficient air is supplied through the air supply nozzle to both support stoichiometric combustion and to be a fast-acting diluent that reduces the combustion temperature without quenching the combustion process. Furthermore, the embodiments are intended to facilitate a combustion process in which combustion products have only short residence times in the zone of maximum temperature, meaning that they are expected to produce less NOx in comparison with known lean burn combustion processes operating at the same maximum temperature. Moreover, it is expected that in such diffusion flames, the air and fuel will burn at or close to the stoichiometric fuel/air ratio throughout the range of engine loads, so the combustion process should produce low emissions even at engine idle speeds, thereby eliminating the need for separate pilot and main burners and variable inlet guide vanes.

The relative velocities of the fuel and air streams as they exit from their respective nozzles have an influence on obtaining the desired low emissions. As the ratio Vair/Vfuel is increased (where Vair is the velocity of the air stream and Vfuel is the velocity of the fuel stream), the flame length is shortened and the base of the flame moves closer to the nozzle tip. This reduces both the residence time of the combustion products in the flame and also the volume of the combustion zone. At present it is believed that the ratio Vair/Vfuel should be greater than unity (Vair/Vfuel>1).

Absolute velocity is also an important factor in reducing NOx emissions, with higher velocities, at least in the subsonic flow regime, resulting in lower NOx emissions for the same Vair/Vfuel ratio. It is believed that the invention is applicable for air velocities in the subsonic, supersonic and hypersonic air flow regimes.

Further factors having a bearing on the performance are the relative values of the delivery pressures of the fuel and the air and the pressure in the combustion chamber. If the air delivery pressure is Pa and the pressure in the combustion chamber is Pc, the pressure difference Pa-Pc necessary to deliver air into the combustion chamber may be termed $\delta p_{air}$. Similarly, if the fuel delivery pressure is Pf, the pressure difference Pf-Pc necessary to deliver fuel into the combustion chamber may be termed $\delta p_{fuel}$. At present it is believed that the ratio $\delta p_{fuel}$ to $\delta p_{air}$ should be less than one ($\delta p_{fuel}/\delta p_{air}$<1). The pressure differences $\delta p_{air}$ and $\delta p_{fuel}$ will be of the order of 4% to 5% of the air delivery pressure Pa and the fuel delivery pressure Pf. In a gas turbine engine, the air stream will be provided at the delivery pressure of the final stage of the associated compressor and the fuel must obviously be delivered at a similar pressure. Such pressures may be in the range of roughly 5 bar to roughly 30 bar.

To maximise combustion efficiency and minimise the possibility of flashback or premature combustion, the air supply nozzle and the fuel supply nozzle are shaped and located relative to each other such that they form a venturi arrangement for air flowing between an inside surface of the air nozzle and an outer surface of the fuel nozzle. The resulting venturi effect increases the speed of the air stream and exerts a suction effect on the fuel nozzle. To form the venturi arrangement, the air nozzle may comprise a contracting nozzle and a region of restricted cross-sectional area in the air nozzle may be defined between the inside surface of the air nozzle and the outer surface of the fuel nozzle. Nevertheless, the venturi arrangement will comply with the requirement of subsonic, supersonic, or hypersonic configuration, depending on the air flow injection regime chosen for specific combustor types. For example, if the flow is supersonic, the venturi nozzle shape will converge to a minimum area, then diverge to the exit.

In the above venturi arrangement, the fuel nozzle is preferably set back (i.e., recessed) with respect to the exit of the air nozzle, the fuel nozzle being nested within an inlet portion of the air nozzle. The distance by which the fuel nozzle is set back relative to the air nozzle exit is preferably sufficient to shield the fuel nozzle from the combustion products and is likely to be a few millimetres (a range of roughly 5 mm to 10 mm may be typical). Recessing the fuel nozzle relative to the air nozzle tends to prevent hot combustion products from contacting the fuel nozzle because the air stream provides positive shielding. That is, the air stream flows past the fuel nozzle before it flows through the air nozzle, thereby shielding the fuel nozzle from combustion products in the combustion chamber. However, the set back distance should not be so large as to enable the air stream and the fuel stream to mix to any significant extent before emerging into the combustion chamber, because this may have undesirable consequences for flame characteristics, leading to higher NOx emissions, and/or flashbacks.

The fuel is selected from the group consisting of liquid and gaseous fuels, such as natural gas ($CH_4$), coke oven gas (COG), medium calorific value (MCV) fuel, integrated gasification combined cycle (IGCC) high hydrogen gasification gas, pure hydrogen, fuels containing fine particles of solid fuel such as coke dust, powdered or pulverised solid fuel in a gaseous stream (such as steam, nitrogen or air) to simulate a gaseous fuel, powdered or pulverised solid fuel in a liquid stream (such as water) to simulate a liquid fuel, or a pre-vaporised conventional liquid fuel. The burner comprises a circular air supply nozzle and a circular fuel supply nozzle nested concentrically within the air supply nozzle. The following burner size relationships are believed to maximise combustion efficiency and reduce pollution relative to the prior art:

- The ratio of the exit diameter of the air nozzle to the exit diameter of the fuel nozzle should be within the range of roughly 3 to 8, preferably 3.5 to 5.
- Absolute sizes of the exit diameters of the fuel and air supply nozzles should be within the ranges of roughly

  • 0.5mm to 3.5mm, preferably 1.0mm to 3.0mm, for the fuel nozzle,
  • 4.0mm to 11.0mm, preferably 4.8mm to 10.5mm, for the air nozzle.

In view of the above small burner size, it will be necessary to assemble groups or matrices of such burners together in the combustion chamber in order to produce sufficient power for normal commercial processes. For example, an upstream wall of an annular combustion chamber in an industrial or aero gas turbine engine could have groups or matrices of such burners arranged around it. In such groups or matrices, the burners should be positioned sufficiently far apart to ensure that the small diffusion flame each burner produces does not merge to any significant extent with any of the flames produced by neighbouring burners. In such an arrangement, a typical distance between the centres of adjacent fuel nozzles should be of the order of two to three times the diameter of the air nozzles. An alternative, second, burner comprises an annular air supply nozzle and a circular row of circular fuel supply nozzles centrally located within the radial height of the air supply nozzle and angularly spaced apart from each other around the air supply nozzle. Although the term "annular" usually means circular or substantially circular, when used throughout this description and claims the term should be interpreted as broad enough to embrace other circuitous shapes such as elliptical, polygonal, rectangular, and the like.

In this second burner the radial height of the annular air supply nozzle must be sufficient to produce an annular air stream that enables the required cooling of the individual flames produced by the fuel supply nozzles. A radial height similar to the diameter of the circular air supply nozzle of the previous alternative may be sufficient for this task. Such a burner would deliver the fuel streams into the combustion chamber as small diameter cores of fuel embedded in an annular air stream. The dimensions of the individual fuel supply nozzles within the annular air supply nozzle will be as for the previous alternative, and the distance between neighbouring fuel supply nozzles will also be the same. It will be evident that the amount of power such a burner can produce will be greater than a single burner of the preceding alternative and will be determined by the diameter of the annular air supply nozzle and the number of fuel supply nozzles nested inside the annular air supply nozzle. In the context of gas turbine engine technology, such a burner could be particularly suitable for so-called "can" or "cannular" types of combustion chamber, in which each upstream wall of a combustion chamber is provided with one of the burners. Alternatively, a number of such burners could be equally spaced around the upstream wall of an annular combustion chamber.

A third alternative burner burner having an annular air supply nozzle and an annular fuel supply nozzle centrally located within the radial height of the air supply nozzle, the fuel and air supply nozzles being concentric. Such a burner would look like an "annular sandwich", and would deliver the fuel stream into the combustion chamber sandwiched between a radially outer air stream and a radially inner air stream. In this third alternative burner the radial height of the fuel supply nozzle should be such as to produce an annular flame having a radial thickness which facilitates rapid heat loss to the inner and outer air streams and therefore the desired low flame temperatures. Likewise, the radial height of the annular air supply nozzle must be sufficient to produce inner and outer annular air streams that enable the required cooling of the annular flame produced by the fuel supply nozzle. A radial height of the annular air supply nozzle similar to the diameter of the circular air supply nozzle of the previous alternative may be sufficient for this task, provided the annular flame is sufficiently thin in the radial direction. Possibly, the radial height of the annular fuel supply nozzle could be in the range of roughly 0.5mm to 3.5mm. However, in view of the above considerations, it is preferred that the radial height of such an annular fuel supply nozzle is in the range of roughly 0.5mm to 1.0mm. A fourth alternative burner comprises an elongate air supply nozzle having a height and a length and a row of circular fuel supply nozzles centrally located within the height of the air supply nozzle, the length of the elongate air supply nozzle being many times its height, so that this alternative is a linear analogue of the above-described second alternative burner. A fifth alternative burner comprises an elongate air supply nozzle having a height and a length and an elongate fuel supply nozzle centrally located within the height of the air supply nozzle, the lengths of both the supply nozzles being many times their height, so that this burner variant is a linear analogue of the above-described third alternative. If both nozzles are straight, such a burner would look like a sandwich or a "a slot within a slot".

Regarding the relative dimensions of the supply nozzles required to obtain low flame temperatures using burners according to the fourth and fifth alternative burners, the considerations that apply are similar to those already mentioned in respect of the previous burners. The elongate nozzles of the fourth and fifth burners can be straight-sided, curved or even wavy, say in the form of a sine wave or similar. Hence, for a given space, a wavy elongate fuel supply nozzle would have an increased length relative to a straight elongate fuel supply nozzle and hence increase the flame's surface to volume ratio.

In all the above burners, or (in the case of burners comprising a number of individual fuel supply nozzles) individual fuel supply nozzles can be supplied with different types of fuel and interspersed with each other to enable the combustor to operate on two or more different fuel types (e.g., liquid and gaseous), either simultaneously or at different times during an operating cycle.

It would be possible, though not presently preferred, to locate an air swirler in or before the air supply nozzle to swirl the air stream before it emerges into the combustion chamber. Alternatively, a longitudinal axis of the air supply nozzle may angled with respect to a longitudinal axis of the fuel supply nozzle. This can provide a global swirl component to the air stream without the need for a separate air swirler component. However, it is generally preferred at present that the air stream does not have a substantial swirl component because this can create regions of lower pressure in the combustion chamber that can encourage the hot combustion products to move towards the burner.

Although size ranges have been quoted for the dimensions of the air and fuel supply nozzles of the alternative burners, optimum combustion characteristics will be obtained by matching particular nozzle dimensions to particular fuels. However, if it is desired to use two or more types of fuel in the same burner, good combustion characteristics are nevertheless obtainable by making appropriate compromises between the ideal nozzle dimensions for the different fuel types. Fuel supply nozzles using the same fuel can be supplied from a common source through a manifold.

Although the combustors and burners described herein have particular application to gas turbine engines, the same principles are applicable at lower absolute air and fuel delivery pressures to various other types of domestic and industrial equipment, such as gas central heating boilers and steam-generating boilers

**Brief Description of the Drawings**

The method as claimed and Exemplary burners on which the invention can be carried out will now be described, with reference to the accompanying diagrammatic drawings, in which:

> Figure 1A is a side elevation in axial cross section of a single burner in a combustor;
> Figure 1B is an end view of the burner in Figure 1A, taken on arrow 1B of Figure 1A;
> Figure 2 is an end view of a group of such burners in a matrix arrangement;
> Figure 3 is an end view of eight groups of burners like those of Figure 2, the groups being arranged around an upstream end wall of an annular combustion chamber;
> Figure 4A is a side elevation in axial cross section showing an annular burner arrangement the burner arrangement being shown in position in the upstream end wall of an annular combustion chamber;
> Figure 4B is an end view of the upstream end wall of the annular combustion chamber of Figure 4A, taken in the direction of arrow 4B in Figure 4A;
> Figure 5A is a side elevation in axial cross section of a different annular burner arrangement the burner arrangement again being shown in position in the upstream end wall of an annular combustion chamber;
> Figure 5B is an end view of the burner arrangement of Figure 5A, taken in the direction of arrow 5B of Figure 5A;
> Figure 6 is an end view of a further annular burner arrangement;
> Figure 7A is a side elevation in axial cross section of a linear burner arrangement the burner arrangement being shown in position in the upstream end wall of a combustion can;
> Figure 7B is a view of the upstream end wall of the combustion can taken on arrow 7B of Figure 6A;
> Figure 8 is a diagrammatic side elevation in axial cross section of a gas turbine engine combustion chamber and
> Figures 9 to 11 are graphs illustrating test results for embodiments of the invention. In the drawings, like parts are given like reference numbers.

**Detailed Description**

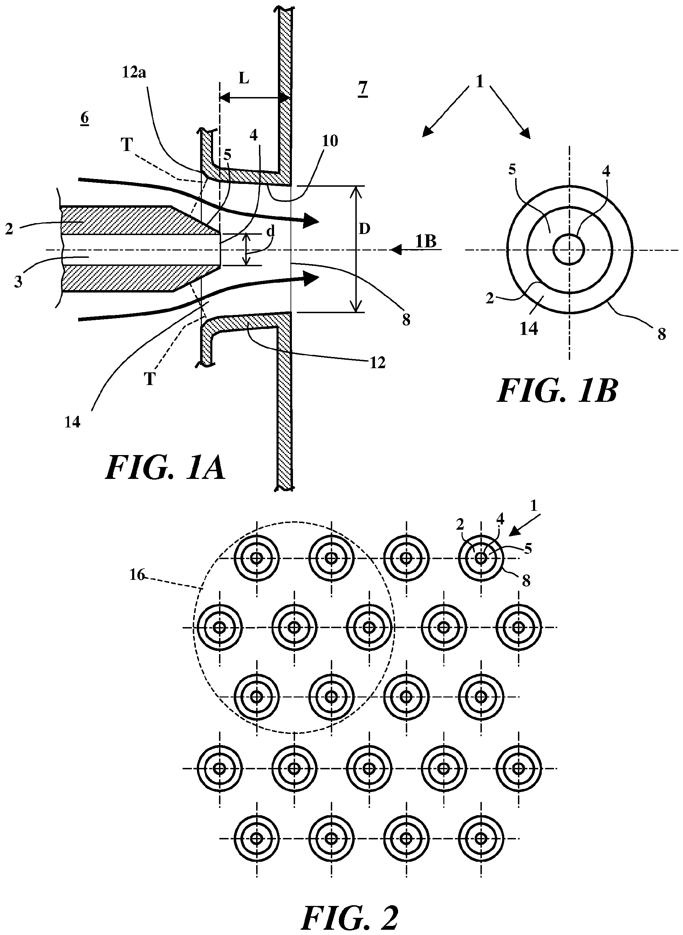

Figures 1A and 1B show a burner 1 configured for a gaseous fuel such as hydrogen ($H_2$), natural gas ($CH_4$), coke oven gas (COG) or medium calorific value (MCV) fuel, for example. The burner 1 includes a fuel supplier 2 having a central fuel supply passage 3 with a circular fuel supply nozzle 4 of exit diameter d. The fuel nozzle is formed by a tapered front end 5 of the fuel supplier 2, which projects coaxially into the mouth of a frusto-conical convergent air supply nozzle 12. Air nozzle 12 receives air from air chamber 6 and tapers towards a circular exit 8 of diameter D, several times larger than fuel nozzle exit diameter d. The air nozzle exit 8 also defines the exit of the burner 1 as a whole, and opens into the interior of a combustion chamber 7. The fuel that exits from fuel nozzle 4 is burnt as a small, relatively cool diffusion flame within the combustion chamber.

An annular passage 14 is defined between the inner surface 10 of the convergent air passage 12 and the tapered front end 5 of the fuel supplier 2. The annular passage is in fact a venturi with a throat at dotted line T. The velocity of the air stream increases as it flows through the passage 14 because of the venturi effect, the air flow through the burner being represented in Figure 1A by the bold arrows. It is assumed here that the flow of air through air nozzle 12 is subsonic, but if supersonic or hypersonic air flow is desired in particular circumstances, the dimensions and configuration of the venturi arrangement will be varied accordingly, as is well known in the science of aerodynamics.

The shape of the convergent air nozzle portion 12, and in particular its radiused leading (i.e. upstream) edge 12a and its frusto-conical surface, can be selected to avoid any, or any excessive, turbulence as the air flows through the passage 14 and out of the nozzle exit 8. The tapered part 5 of the fuel nozzle 4 can also be designed to avoid turbulence and in the present case is tapered like the frustum of a cone. As shown, the upstream edge 12a of the air nozzle 12 is roughly axially aligned with a mid-portion of the tapered part 5 of the fuel nozzle 4. However, the exact amount by which the externally tapered fuel nozzle 4 projects into the internally tapered air nozzle 12 may vary upwards from zero and will depend upon the amount of flow constriction it is desired to create in the venturi, and where it is desired that the venturi throat T should be located. These will in turn depend on the type of fuel it is desired to burn, pressure differentials across the burner, and other factors. Computer-aided analysis or trial-and-error can determine such matters.

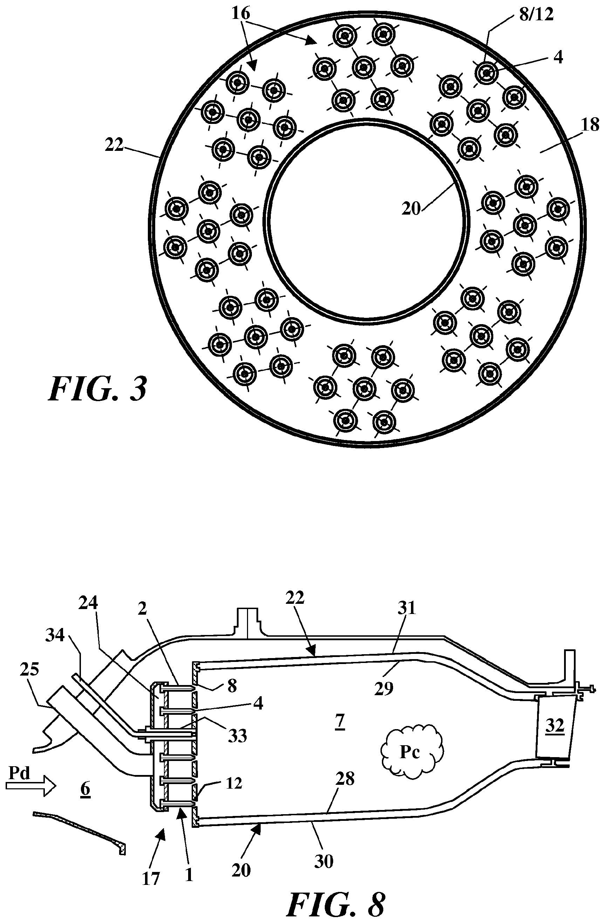

It is emphasised that the burner 1 of Figures 1A and 1B is intended to produce only a small diffusion flame. To produce sufficient heat and combustion products to drive a large gas turbine, it is necessary to group a number of such burners together. Figure 2 shows part of an array or matrix of burners, each burner being like that of Figure 1. Such an array could, for example, extend around the head (upstream wall) of an annular combustion chamber. As illustrated in Figure 3, separate groups 16 of burners 1 could be equi-angularly spaced around the head 18 of an annular combustor, the inner and outer circumferences of the upstream wall being bounded by longitudinally extending inner and outer side walls 20, 22. Such groups 16 of burners could also be used in a retrofit procedure to replace existing types of burners in an annular combustor. Furthermore, such separate groups of burners could be used in separate combustor cans (preferably, one group per can) and could also be used in a retrofit procedure to replace existing types of burners in such cans.

It should also be noted that the present invention can be used in gas turbines equipped with sequential or reheat combustion systems, in either or both of the combustors.

The gaseous fuel for each burner 1 is supplied from a fuel source (not shown) along the central passage 3 of the fuel supplier 2 at a predetermined flow rate. At the same time, combustion air is supplied into air chamber 6 from an air source (not shown, but which in a gas turbine engine would be its high pressure compressor). The combustion air will flow through the air nozzle 12 at a flow rate determined by the pressure difference between air chamber 6 and combustion chamber 7, the air velocity past the fuel nozzle 4 being increased by the venturi effect, as mentioned above.

The relative values of the delivery pressures of the fuel and the air and the pressure in the combustion chamber have an influence on correct functioning of the invention. If the air delivery pressure is Pa and the pressure in the combustion chamber is Pc, the pressure difference Pa-Pc necessary to deliver air into the combustion chamber may be termed $\delta p_{air}$. Similarly, if the fuel delivery pressure is Pf, the pressure difference Pf-Pc necessary to deliver fuel into the combustion chamber may be termed $\delta p_{fuel}$. At present it is believed that the ratio $\delta p_{fuel}$ to $\delta p_{air}$ should be less than one ($\delta p_{fuel}/\delta p_{air}<1$). The pressure differences $\delta p_{air}$ and $\delta p_{fuel}$ will be of the order of 4% to 5% of the air delivery pressure Pa and the fuel delivery pressure Pf, respectively. In a gas turbine engine, the air stream will be provided at the delivery pressure of the final stage of the associated compressor and the fuel must obviously be delivered at a similar pressure. Such pressures may be in the range of roughly 5 bar to roughly 30 bar.

The air stream that flows through the air nozzle 12 represents the amount of air that is required for stoichiometric combustion of the fuel stream and subsequent dilution of the combustion process, the excess air being sufficient to act as a heat sink effective to lower the temperature of the above-mentioned diffusion flame sufficiently to minimise production of nitrogen oxides (NOx). In fact, all the air and the associated fuel acts as a heat sink to reduce the flame temperature. A suitable flame temperature is of the order of 1850 degrees Kelvin or less. The necessary condition to obtain such a relatively low temperature in a diffusion flame is that the flame must lose heat rapidly to the surrounding air, and the invention achieves this by burning the fuel in a small flame that has a relatively high surface to volume ratio when compared with the flames of existing premixed low NOx burners. For example, assuming use of a methane fuelled burner matrix like Figure 2 in a gas turbine engine combustor, with a fuel exit nozzle diameter of 1.4mm and an air exit nozzle diameter of 7.2mm, then during engine idle, the surface-to-volume ratio of each burner flame could be of the order of 0.5. For the hottest part of the flame, this ratio would probably not change much with increasing engine power.

Another of the controlling factors in the production of pollutants during the combustion process is the length of time the combustion products stay in the zone of high flame temperatures - the so-called "residence time". Because the small diffusion flame of the invention minimises the residence times of combustion products in the zone of high flame temperatures, combustors using the invention are projected to have lower NOx emissions than combustors using known ultra-low-NOx lean premix technology. Furthermore, use of a small diffusion flame ensures that the air and fuel burn at the air/fuel ratio associated with the maximum flame speed (which is normally on the fuel rich side of stoichiometric when both air and fuel are supplied at the same temperature) across the entire range of loads experienced by a gas turbine engine. Therefore, the invention should enable stable and oscillation-free low-NOx combustion even at very low load conditions, such as so-called "idle" conditions. Hence, it is envisaged that pilot fuel burners and their associated fuel system may not be needed when the main fuel burners are designed in accordance with the present invention.

Burners suitable for carrying out the invention can be optimised for use with a particular fuel. For example, hydrogen is notorious for having high flame speeds, which makes hydrogen burners prone to flashback, and a high burning temperature, which tends to produce high NOx levels in conventional combustion regimes, but it is expected that burners with nozzle sizes optimised for use with hydrogen fuel will not require either dilution of the fuel with a diluent such as nitrogen to reduce flame speed, or injection of diluents such as steam into the combustion chamber to control NOx.

Alternatively, the burners can be designed to allow use of a number of fuels without changing the hardware. Although the nozzle sizes, etc., will not be optimum for all the fuels, acceptable emission levels will nevertheless be achieved. For example, using a fuel nozzle exit diameter of 1.4mm, the predicted maximum flame temperature is 1730K for natural gas fuel and 1740K for pre-vapourised kerosene, both examples being at 100% load for a given engine and the same hardware configuration.

It is a common expedient in gas turbine engine combustion chamber design to introduce dilution air after the primary combustion zone. However, in the present invention, all the combustion air required for each flame, including the dilution air, is supplied through the air nozzles 12 and is therefore immediately available in the proximity of the flame, i.e., the combustion process in the flame is followed by fast dilution and the post-flame reaction continues as a lean-burn reaction. For example, after dilution by the immediately adjacent air, the flame temperature is reduced from the above-mentioned 1850K or less to about 1100-1200K and the reaction continues through the combustion chamber to achieve a turbine inlet temperature of about 1600K.

Another advantage of the invention is that the fuel is injected directly into the combustion zone, with no pre-mixing in a separate premixing chamber; therefore no flash-back is expected and auto-ignition problems associated with high compression ratio engines or sequential (pre-heat/re-heat) combustors are likely to be avoided.

A further advantage associated with the present invention is that the use of small diffusion flames avoids the type of combustion instability that result in dynamic pressure oscillations in combustion chambers containing larger diffusion flames or lean-burn combustion processes.

The present invention could also be used to facilitate simplification of gas turbine engine systems by reducing or eliminating the need for fuel staging and the associated use of variable inlet guide vanes at the entrance to the compressor to improve the engine's "turndown" characteristic - i.e., to extend the load range over which low emissions can be achieved.

Yet another advantage of the invention arises because the air stream is effective as a protective air purge and shield to prevent combustion products such as carbon from building up on the end of the fuel nozzle 4. This positive shielding effect inhibits the flow of hot combustion products through the final nozzle 8 back to the fuel nozzle 4, and reduces or obviates the need for a separate supply of air for the sole purpose of purging fuel nozzles.

For a gas turbine engine burning a gaseous fuel, the diameter d of the fuel nozzle exit is in the range of roughly 0.5mm to roughly 5mm, preferably roughly 0.5mm to roughly 3mm. For example, for methane fuel ($CH_4$) the diameter would be about 1.4 mm. More generally, the optimum diameter will depend on the type of fuel that is to be used. For example, when burning pure liquid fuels, such as kerosene or diesel, it will probably be advantageous to use smaller fuel nozzle exit diameters, e.g., in the range of roughly 0.2mm to roughly 0.5mm.

To obtain the correct excess of air when $CH_4$ fuel is used, the exit diameter D of the air nozzle 12 will be about 7.2 mm, assuming subsonic air flow in the air nozzle. More generally, for each fuel type, the ratio of the exit diameter of the fuel nozzle to the exit diameter of the air nozzle will be a function of the desired air/fuel velocity ratio, i.e.,

$$d/D = f(air\ velocity/fuel\ velocity)$$

and from this relationship the exit diameter of the air nozzle may be in the range of roughly 4 mm to roughly 15mm, again assuming subsonic air flow in the air nozzle The desired air/fuel velocity ratio in turn depends on the allowable NOx content of the combustion products. The following is the expected correlation that gives the NOx emissions for a given fuel at given conditions of inlet temperature, inlet pressure and air/fuel ratio:

$$NOx = f(V_{air}{}^{n1},\ V_{fuel}{}^{n2},\ d_{fuel}{}^{n3})$$

where

NOx is the NOx emissions in parts per million by volume (ppmv)
$V_{air}$ is the air exit velocity in metres per second (m/s)
$V_{fuel}$ is the fuel exit velocity (m/s)
$d_{fuel}$ is the fuel nozzle exit diameter in millimetres (mm)
n1, n2 and n3 are power exponent values (positive or negative)

The axial distance L between the exit 8 of the air nozzle 12 and the exit of fuel nozzle 4 is selected to enhance the positive shielding effect mentioned above. In practice, the axial distance L may not be very critical and in some circumstances the exits of the fuel nozzle and the air nozzle 12 might be substantially coplanar. More typically, however, distance L in the case of a burner like that of Figure 1 or Figure 8 would be about 5 mm.

The individual burners 1 in the arrays of Figures 2 and 3 should be spaced sufficiently far apart from each other that the combustion flames they produce do not merge with each other. Such merging of flames would be undesirable because it would diminish the cooling effect of the combustion air streams and hence produce more environmental pollutants. It has been found that to prevent merging of flames in a matrix of burners with dimensions as quoted above for $CH_4$, a typical distance between the centres of neighbouring fuel supply nozzles would be of the order of 14mm, or roughly 7mm between the boundaries of adjacent air nozzle exits. Plainly, to maintain adequate separation between burners in cases where air nozzles with diameters significantly larger than about 7mm are used, the distances between the centres of neighbouring fuel supply nozzles must be increased. A rule of thumb is that the distance between the centres of adjacent air nozzles/fuel nozzles should be of the order of two to three times the air nozzle diameter. Exact values of such separation distances can be determined using computer-aided analysis or trial-and-error.

Further design considerations allied to the present invention will now be explained.

As known to people skilled in the art, in a gas turbine operating at full load, the air mass flow to the combustor is fixed and this flow will be the same for any given fuel, assuming that the turbine flow capacity is not a limiting factor.

In designing a burner matrix as discussed above, a desired air velocity at the air nozzle exits is selected, for example, 160m/s. From the air mass flow to the combustion system and the desired air velocity, the total area of the air exit nozzles will be calculated. For a given air nozzle exit diameter the total number of holes is calculated; for example to replace a prior art type of low NOx burner in an existing gas turbine engine might require 151 burners of the Figure 1 type, each having an air nozzle exit diameter of 7.2mm. The fuel nozzle exit diameter is defined for a given fuel, together with the desired air velocity/fuel velocity ratio, e.g., 1.4mm diameter for Natural Gas (NG). Therefore, the fuel/air area ratio is defined. For a second (lower calorific value) fuel having a higher volume flow rate for the same heat input, but using the same invention burners as the first fuel, the fuel/air area ratio would be the same, which could compromise performance on the second fuel. Alternatively, the fuel/air area ratio could be changed to give the same desired air velocity/fuel velocity ratio and this could be achieved by changing the fuel nozzle diameter to a larger diameter that will give the same air velocity/fuel velocity ratio. Hence, for a second fuel with twice the volume flow rate of the first fuel, the exit area of the fuel nozzle should be twice that for the first fuel, i.e., 1.98mm instead of 1.4mm.

Some optimization will be required to achieve the required NOx emissions. The procedure could be performed by selecting a larger (or smaller) air nozzle exit diameter, for example 10.5mm (or 4.8mm). In this case, the total number of holes to replace the prior art burner will change to 71 air holes (or 340 air holes). The corresponding NG fuel hole diameter will be 2.04mm (or 0.93mm). That is to say, a matrix of 151, 7.2mm diameter air nozzles with 1.40mm diameter fuel nozzles could be replaced by either:

- a matrix of **71,** 10.5mm diameter air nozzles with 2.04mm diameter fuel nozzles; or
- a matrix of **340,** 4.8mm diameter air nozzles with 0.93mm diameter fuel nozzles

The NOx emissions will be lower for the smaller diameter fuel nozzle size but all three selections may nevertheless give acceptable NOx emissions.

The actual number of such burners used in a gas turbine engine combustion chamber will of course depend not only on the power that the gas turbine is required to generate, but also upon the fuel that is being burnt and upon a design trade-off between the complexity of the combustion system and the degree to which it is considered desirable to avoid production of environmental pollutants.

It will be appreciated by those skilled in the gas turbine combustion art that it is necessary to vary the amount of power produced by a gas turbine engine. This can readily be achieved in the present invention by reducing the amount of fuel supplied through the fuel nozzles, without unduly affecting flame stability or turndown characteristics. Alternatively, or additionally, if deemed to be a requirement for operation of the engine, a fuel staging strategy could be applied to an array or matrix of burners, such as shown in Figures 2 and 3, by varying the number of fuel suppliers 2 that are receiving fuel.

During periods of time when no fuel is flowing through any particular fuel supplier 2 in the arrays of burners in Figures 2 and 3, combustion air will continue to flow through the associated air nozzle 12. Such continuing flow of combustion air would also occur, for example, if some of the burners in an array receive gas fuel and others receive liquid fuel, so that the combustion system can switch between gaseous and liquid fuels. The continuing flow of combustion air through the air nozzles 12 of all the burners 1 means that there will always be streams of fast-moving air that will shield the streams of fuel from the hot combustion products in the combustion chamber 7.

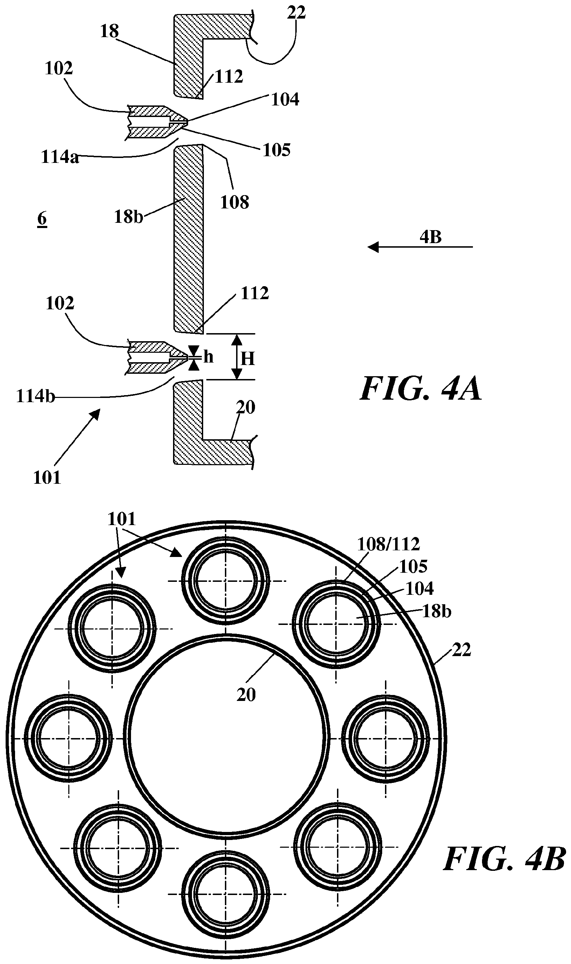

Figures 4A and 4B show a different burner suitable for carrying out the invention. Each burner 101 includes an annular fuel supplier 102 having a tapered front end 105 forming an annular fuel supply nozzle 104 whose exit is a circular slot. Similarly, the air supply nozzle 112 is also annular, being formed in the head 18 of the combustion chamber 7. It will of course be necessary to support the central portion 18b of the combustion chamber head 18 by means of thin struts or the like (not shown) extending across the radial height of the air nozzle 112. If appropriately shaped, such struts could also be used to induce swirl in the air flow, if this were to be deemed desirable in particular circumstances. However, at the present state of development, it is not thought to be desirable to swirl the air flow. The relative positioning and axial cross-sectional shapes of the air and fuel nozzles 104, 112 are similar to those shown in Figure 1, so that air flow through the air nozzle 112 from the air supply chamber 6, is subject to the venturi effect. Because the annular fuel nozzle 104 projects into the annular air nozzle 112 to create the venturi between the external surface of the fuel nozzle and the internal surface of the air nozzle, the venturi actually comprises a radially inner annular air passage 114a and a radially outer annular air passage 114b. Hence, the annular fuel stream that exits from fuel nozzle 104 burns as an annular diffusion flame sandwiched between inner and outer annular air streams.

As was the case for burner 1 of Figure 1, the air stream that flows through the air nozzle 112 is the amount of air required for stoichiometric combustion of the fuel stream, plus enough excess air to act as a heat sink effective to lower the combustion temperature of the above-mentioned diffusion flame and thereby avoid or minimise production of nitrogen oxides (NOx). As also previously mentioned, the air stream is effective as a protective air purge and shield to prevent combustion products such as carbon from building up on the end of the fuel nozzle 104.

In an alternative configuration (not shown), the air supply nozzle 112 could be fed by an annular combustion air supply passage, with the fuel supplier 102 being coaxially located within it. Since the fuel supplier 102 is annular, it would divide the air supply passage into an inner annular air passage and an outer annular air passage.

As was the case for the burners of Figures 1 to 3, the velocity of the combustion air stream increases as it flows past fuel supply nozzle 104, the shapes of the air nozzle 112 and the fuel nozzle 104 being selected to avoid any substantial turbulence as the air flows through the annular passages 114a and 114b.

As shown in Figure 4B, in a large diameter annular combustion chamber, such as would be suitable for an industrial gas turbine engine or an aero gas turbine engine, there would be a number of the burners 101 equiangularly spaced around the combustion chamber. However, in a combustion chamber of the "can" or "cannular" type, there would probably be just one or two burners 101 per combustion chamber head.

Burner 101 is preferably configured for a gaseous fuel such as hydrogen ($H_2$), natural gas ($CH_4$), coke oven gas (COG) or medium calorific value (MCV) fuel, for example. Depending upon its diameter and nozzle dimensions, one such gas burner 101 would be equivalent to several to many of the burners 1 of Figures 1 when configured for gas, because each burner 101 would burn more gas fuel than each burner 1. Because the object is to burn the fuel in a diffusion flame while maintaining a low flame temperature, the radial exit height h of the fuel nozzle 104 is considerably less than the diameter d of the exit of fuel nozzle 4 in Figure 1. For example, it may be about 0.6 mm for $CH_4$. The exit height H of the air nozzle may be, e.g., about 7.2 mm.

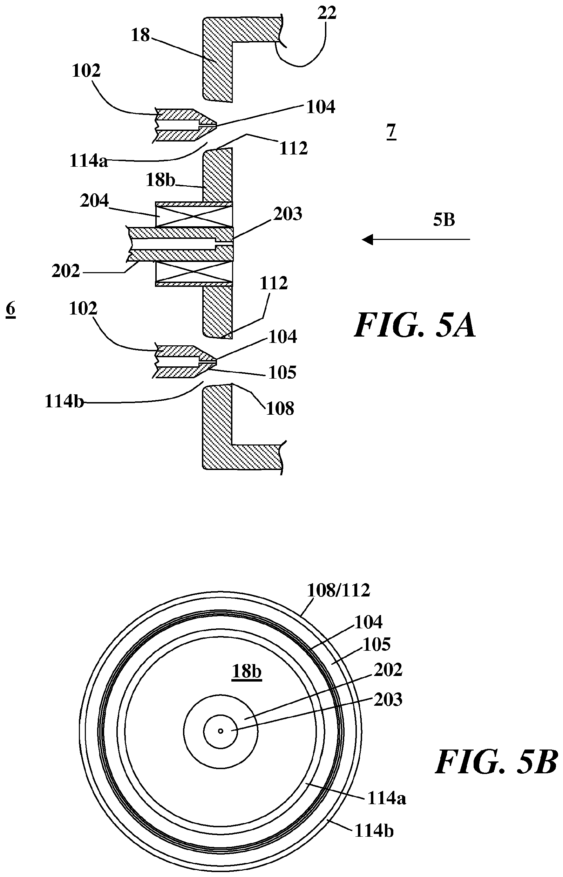

Figure 5A shows a burner 201 that is identical to burner 101 of Figure 4A, except that an additional fuel supplier 202 with fuel supply nozzle 203 is centrally located inside the combustion chamber head region 18b that is bounded by the annular air nozzle 112. The additional fuel supply nozzle 203 is configured to supply liquid fuel, or pre-vaporised liquid fuel. An annular air passage 204 surrounds the fuel supplier 202 and fuel nozzle 203 and optionally includes an air swirler (represented schematically in Figure 5A by the diagonal crosses) for providing a swirl component to the delivered air stream, if this is found to be beneficial. Although not shown in Figure 5A, the fuel nozzle 203 may be set back relative to the air nozzle outlet so that the air stream issuing therefrom provides positive shielding for the fuel nozzle 203 when it is not in use.

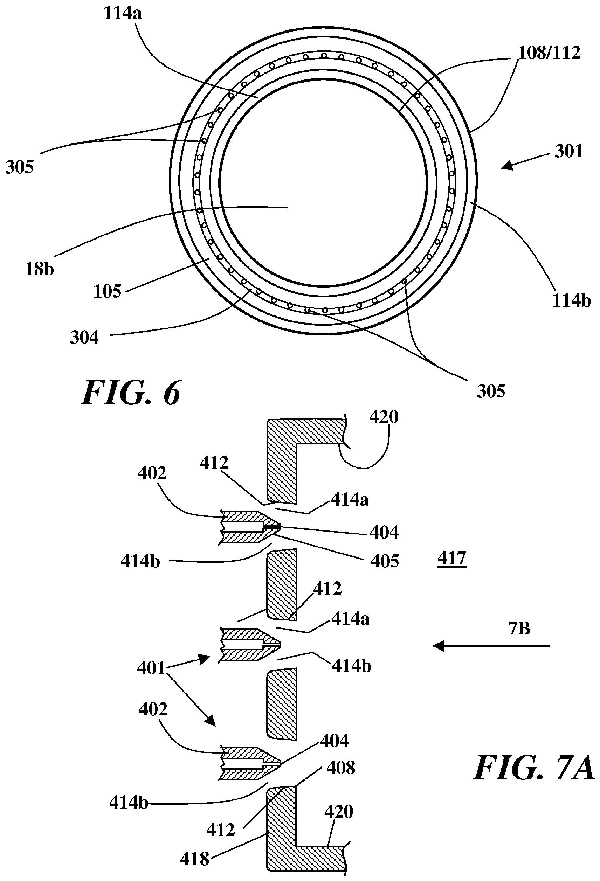

Figure 6 shows a gas fuel burner 301 that is identical to the burner 101 of Figures 4A and 4B, except that annular fuel supply nozzle 104 has been replaced with an annular fuel supply nozzle 304 in which the continuous exit slot of nozzle 104 has been replaced by a plurality of equally spaced-apart exit holes 305. Each hole 305 is similar to the exit hole of fuel nozzle 4 in Figure 1. In an alternative burner (not shown) annular fuel supply nozzle 304 and its exit holes 305 could be replaced by equally spaced-apart fuel suppliers and fuel nozzles, corresponding in number to exit holes 305, and similar to fuel nozzles 4 and fuel suppliers 2 in Figure 1A. A further modification would be to replace some of these spaced-apart gas fuel suppliers and nozzles with liquid fuel suppliers and nozzles, thus giving the burner the ability to deliver both gaseous fuel and non pre-vaporised liquid fuel. The liquid burners would normally be interspersed with the gas burners in a symmetrical or regular manner, and as previously mentioned, would have smaller fuel nozzle exit diameters than the gas burners.

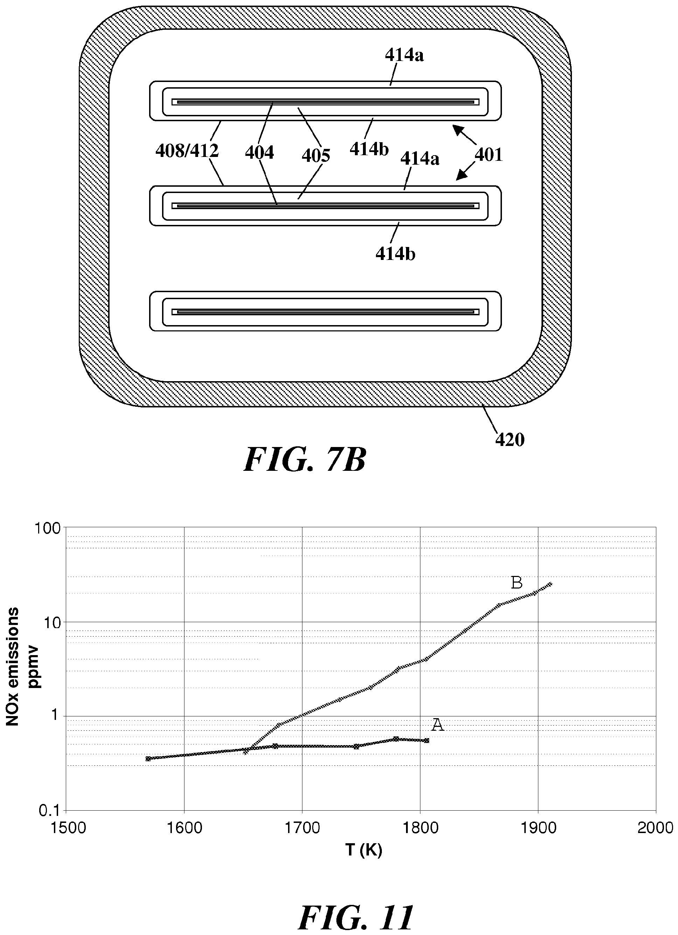

Figures 7A and 7B show a further burner comprising a "can" type of combustion chamber 417 with a peripheral wall 420. The head 418 of the combustion chamber 417 houses three laterally elongate and mutually parallel burners 401. Each burner 401 comprises a laterally elongate air supply nozzle 412 and a laterally elongate fuel supply nozzle 404, both of whose exits take the form of an elongate opening or slot of straight linear form. As in Figure 4A, the combustion air is supplied from chamber 6. The fuel suppliers 402 are also laterally elongate, and because the fuel nozzles 404 project into the air nozzles 412 to create venturi passages between the external surface of the fuel nozzle and the internal surface of the air nozzle, the venturi passages comprise twin laterally elongate passages 414a and 414b. Hence, the fuel streams that exit from fuel nozzle 401 burn as laterally elongate diffusion flames sandwiched between laterally elongate air streams. Note, however, from Figure 7B, that the air nozzles 412 extend around the extreme ends of the fuel nozzles 404, thereby ensuring that the air shielding effect extends around the extreme ends of the flame in the combustion chamber 417.

Although the burners 401 are linear and arranged in parallel, they can alternatively be formed to various other linear shapes as desired. For example, fuel and air nozzles could be formed into straight-sided geometrical shapes or wavy lines.

Referring now to Figure 8, there is shown, in axial section, a side elevation of part of a gas turbine engine provided with an annular combustion chamber 7. Compressed air at compressor delivery pressure Pd enters a plenum chamber 6 surrounding the combustion chamber 7, which is at a pressure Pc. The air enters the combustion chamber 7 through frusto-conical convergent air supply nozzles 12, which form part of a matrix or group 17 of burners 1 in the head 18 of the combustion chamber. Simultaneously, fuel enters the fuel suppliers 2 from a manifold 24 fed by a fuel line 25. Fuel from each of the fuel supply nozzles 4 at the free ends of the fuel suppliers 2 is injected into the combustion chamber 7 as jets of fuel surrounded by air, as previously described.

The combustion chamber 7 has radially inner and radially outer side walls 20, 22, respectively. Both side walls 20, 22 are double-skinned, comprising inner skins 28, 29 and outer skins 30, 31. Because the combustion process does not require any dilution air to be supplied through the chamber walls, the inner skins 28, 29 are impervious. However, it is necessary actively to cool the inner skins 28, 29 against the heat of the combustion process, therefore the outer skins 30, 31 are provided with many small holes (not shown) which direct jets of air from chamber 6 against the inner skins 28, 29, thereby effecting impingement cooling of the inner skins. Spent cooling air is exhausted from the space between the inner and outer skins through their downstream ends, and may for example be exhausted into the main turbine flow through cooling passages and holes in the turbine nozzle guide vanes 32. Alternatively, it would be possible to use all the combustion and dilution air to cool the combustor inner and outer walls, before redirecting it all to the air supply nozzles 12.

The part of a gas turbine engine shown in Figure 8 assumes that the burners 1 are optimised for gas fuel injection during sustained, long-term operation of the gas turbine at high power. Such optimisation would be particularly advantageous in a gas turbine engine used for base-load power generation. Hence, the burner matrix 17 also includes conventional liquid fuel burners 33 fed from fuel lines 34, these being equi-angularly spaced around the combustor head annulus 18. Burners 33 may be used for emergency power and for starting of the gas turbine engine from cold.

Whereas the above description has focused on versions of the invention suitable for gas turbine combustion systems, the invention also has the potential to be used for steam boilers with a gaseous stream containing particles of solid fuel such as coke dust or pulverised solid fuel in a liquid stream (e.g., water), in addition to normal fuels.

A further use of the invention could be for domestic central heating boilers.

**Experimental Results**

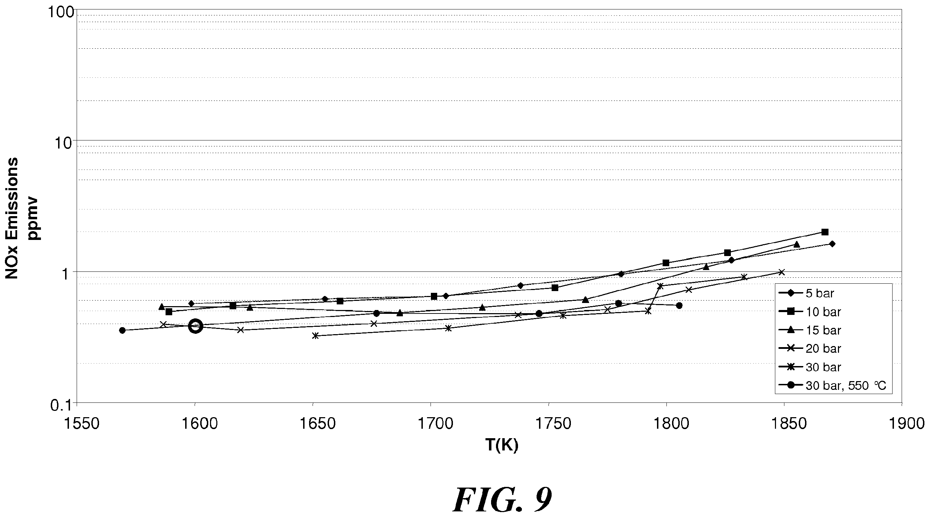

Figure 9 is a graph of NOx emissions versus flame temperature and shows the results of tests on a burner of similar configuration to that illustrated in Figure 1, using methane fuel ($CH_4$) with air containing 15% oxygen ($O_2$). Test parameters were:

> Diameter of air nozzle exit 7.2mm,
> Air velocity at air nozzle exit 150 m/s
> Air supply temperature, five test sets, 723K (450 °C)
> Air supply temperature, one test set, 823K (550 °C)
> Diameter of fuel nozzle exit 1.4mm
> NOx sensor probe station: 180mm downstream of the burner air nozzle exit.

The graph shows the levels of NOx (in parts per million by volume on a logarithmic scale) produced by the burner over a range of air delivery pressures from 5 bar to 30 bar and a range of flame temperatures from about 1570K to about 1870K.

The design point for the burner with regard to the desired flame temperature is 1600K, as indicated by a circle on the line representing a set of tests using an air delivery pressure of 30 bar and an air delivery temperature of 823K.

NOx production during the tests varied from about 0.38 ppmv at the design point to about 2.0 ppmv at a flame temperature of 1867K, an air delivery pressure of 10 bar and an air delivery temperature of 723K.

It is also notable that at a second gas sensor probe station, 680mm downstream of the burner air nozzle exit, sensed levels of carbon monoxide (CO) and unburned hydrocarbons were zero, indicating that combustion of the fuel was complete before that station.

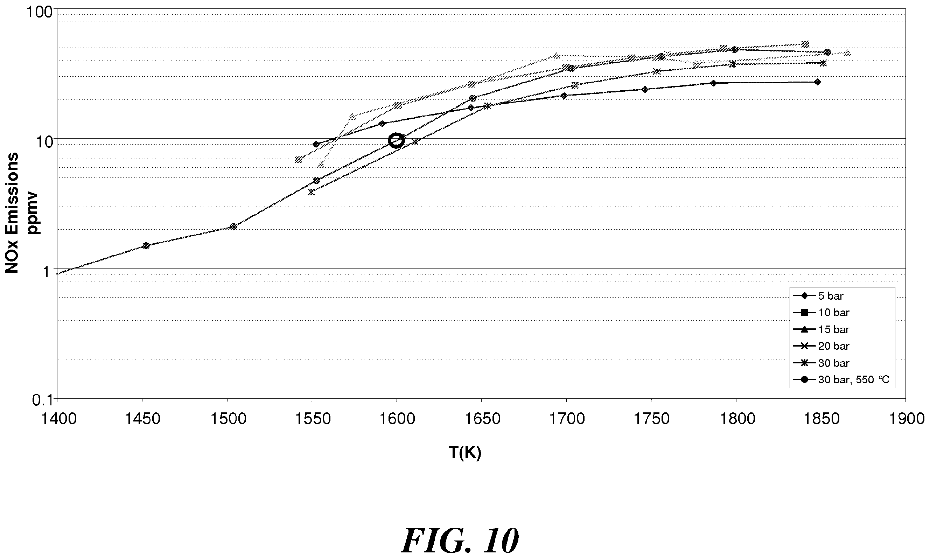

Figure 10 is a graph showing the results of tests on a burner of similar configuration to that illustrated in Figure 1, using pure hydrogen fuel ($H_2$). Burner test parameters were the same as noted above for Figure 9.

The graph shows the levels of NOx (in parts per million by volume on a logarithmic scale) produced by the burner over a range of air delivery pressures from 5 bar to 30 bar and a range of flame temperatures from about 1400K to about 1865K.

The design point for the burner with regard to the desired flame temperature is again 1600K, as indicated by a circle on the line representing a set of tests using an air delivery pressure of 30 bar and an air delivery temperature of 823K (550 degrees C).

NOx production during the tests varied from about 9.3 ppmv at the design point to about 51 ppmv at a flame temperature of 1840K, an air delivery pressure of 15 bar and an air delivery temperature of 723K.

Regarding the set of tests carried out at an air delivery pressure of 30 bar and an air delivery temperature of 823K, it is notable that at a flame temperature of 1400K, the hydrogen fuel burnt with NOx levels at or below 1 ppmv. This implies that with suitable burner design (e.g., smaller fuel nozzle hole diameter) or other combustion parameter adjustments to obtain more rapid flame heat dissipation, it may be possible to burn pure hydrogen at 1600K with NOx levels at or below 1 ppmv.

Figure 11 is a further graph of NOx emissions versus flame temperature, showing the results of two combustion tests, both burning methane fuel with air containing 15% oxygen, the air delivery temperature and pressure being respectively 823K and 30 bar for both tests. A burner like that described for Figure 9 produced the results indicated by line A on the graph, whereas a prior art low NOx burner produced the results indicated by line B, the prior art burner being of the sort in which the fuel and the air are premixed before entry to the combustion chamber. The NOx sensor was at the same position in the test rig as previously noted. Regarding line A, it will be seen that over a flame temperature range of 1558K to 1805K, NOx production increased only from about 0.35 ppmv to 0.53 ppmv, whereas for line B, NOx production increased ten-fold from about 0.40 ppmv at 1652K to 4 ppmv at 1805K.

The above described embodiments are purely exemplary, and modifications can be made within the scope of the invention as claimed. Thus, the breadth and scope of the present invention should not be limited by any of the above-described exemplary embodiments.

Unless the context clearly requires otherwise, throughout the description and the claims, the words "comprise", "comprising", and the like, are to be construed in an inclusive as opposed to an exclusive or exhaustive sense; that is to say, in the sense of "including, but not limited to".

**Claims**

1. A method for burning fuel with air in a combustion chamber (7, 417) with low production of NOx emissions, comprising the steps of:

   supplying fuel and air to a burner (1, 101, 201, 301,401) associated with the combustion chamber (7, 417), the amount of air supplied being at least as much as required for stoichiometric combustion of the fuel and all subsequent dilution of the combustion process in the combustion chamber (7, 417); and
   injecting the fuel and all the air through the burner (1, 101, 201, 301,401) directly into the combustion chamber (7, 417) in a substantially unmixed state as a fuel stream inside an air stream, burning fuel with the air in a diffusion flame, wherein the air is immediately available in the proximity of the flame during the combustion process to act as a heat sink, diluting the combustion process and continuing a post-flame reaction as a lean-burn reaction, wherein the fuel stream is injected with a thickness such that the fuel burns in the combustion chamber (7, 417) at or close to the stoichiometric fuel/air ratio as a diffusion flame with a high surface-to-volume ratio;
   **characterized in that** the fuel and air streams are injected such that when leaving the burner (1, 101, 201, 301,401), the ratio of the velocity of the air stream to the velocity of the fuel stream is greater than unity.

2. The method of claim 1, wherein no part of a fuel stream emerging from the burner (1, 101, 201, 301,401) is more than roughly 2.5mm from a boundary between the fuel stream and the air stream.

3. The method of claim 1, wherein the fuel is injected such that the distance from a centreline of a gaseous fuel stream to a boundary between the fuel stream and the air stream is in the range of roughly 0.5mm to roughly 5mm.

4. The method of claim 1, wherein the fuel is injected such that the distance from a centreline of a gaseous fuel stream to a boundary between the fuel stream and the air stream is in the range of roughly 0.5mm to roughly 3 mm.

5. The method of claim 1, wherein the fuel is injected such that the distance from a centreline of a liquid fuel stream to a boundary between the fuel stream and the air stream is in the range of roughly 0.2mm to roughly 0.5mm.

**Patentansprüche**

1. Verfahren zur Verbrennung von Brennstoff mit Luft in einer Brennkammer (7, 417) mit geringer Erzeugung von NOx-Emissionen, das folgende Schritte umfasst:

   Zuführen von Brennstoff und Luft in einen mit der Brennkammer (7, 417) verbundenen Brenner (1, 101, 201, 301, 401), wobei die Menge der zugeführten Luft mindestens der Menge entspricht, die für die stöchiometrische Verbrennung des Brennstoffs und die gesamte anschließende Verdünnung des Verbrennungsprozesses in der Brennkammer (7, 417) erforderlich ist; und
   Einspritzen des Brennstoffs und der gesamten Luft durch den Brenner (1, 101, 201, 301, 401) direkt in die Brennkammer (7, 417) in einem im Wesentlichen ungemischten Zustand als ein Brennstoffstrom innerhalb eines Luftstroms, Verbrennen des Brennstoffs mit der Luft in einer Diffusionsflamme,
   wobei die Luft während des Verbrennungsprozesses in der Nähe der Flamme sofort verfügbar ist, um als Wärmesenke zu wirken, Verdünnen des Verbrennungsprozesses und Fortsetzen einer Nachflammreaktion als Magerbrennreaktion, wobei der Brennstoffstrom mit einer Dicke eingespritzt wird, dass der Brennstoff in der Brennkammer (7, 417) bei oder nahe dem stöchiometrischen Brennstoff-Luft-Verhältnis als Diffusionsflamme mit einem hohen Oberfläche/Volumen-Verhältnis verbrennt;
   **gekennzeichnet dadurch, dass**, der Brennstoffstrom und der Luftstrom so eingespritzt werden, dass das Verhältnis der Geschwindigkeit des Luftstroms zum Verhältnis der Geschwindigkeit des Brennstoffstroms beim Herausströmen aus dem Brenner (1, 101, 201, 301, 401) größer als eins ist.

**2.** Verfahren nach Anspruch 1, wobei sich kein Teil eines aus dem Brenner (1, 101, 201, 301, 401) herausströmenden Brennstoffs mehr als etwa 2,5mm von einer Grenze zwischen dem Brennstoff und dem Luftstrom befindet.

**3.** Verfahren nach Anspruch 1, wobei der Brennstoff so eingespritzt wird, dass der Abstand von einer Mittellinie eines gasförmigen Brennstoffstroms bis zu einer Grenze zwischen dem Brennstoffstrom und dem Luftstrom im Bereich zwischen etwa 0,5mm und etwa 5mm liegt.

**4.** Verfahren nach Anspruch 1, wobei der Brennstoff so eingespritzt wird, dass der Abstand von einer Mittellinie eines gasförmigen Brennstoffstroms bis zu einer Grenze zwischen dem Brennstoffstrom und dem Luftstrom im Bereich zwischen etwa 0,5mm und etwa 3mm liegt.

**5.** Verfahren nach Anspruch 1, wobei der Brennstoff so eingespritzt wird, dass der Abstand von einer Mittellinie eines flüssigen Brennstoffstroms bis zu einer Grenze zwischen dem Brennstoffstrom und dem Luftstrom im Bereich zwischen etwa 0,2mm und etwa 0,5mm liegt.

**Revendications**

**1.** Procédé destiné à brûler un carburant mélangé à de l'air dans une chambre de combustion (7, 417) avec une faible production d'émissions de NOx, comprenant les étapes consistant à :

fournir un carburant et de l'air à un brûleur (1, 101, 201, 301, 401) associé à la chambre de combustion (7, 417), la quantité d'air fournie étant au moins égale à celle requise pour une combustion stoechiométrique du carburant, et pour toute dilution ultérieure du processus de combustion dans la chambre de combustion (7, 417) ; et
injecter le carburant et la totalité de l'air à travers le brûleur (1, 101, 201, 301, 401) directement dans la chambre de combustion (7, 417) dans un état sensiblement non mélangé en tant que flux de carburant à l'intérieur d'un flux d'air, en brûlant le carburant et l'air en une flamme de diffusion ;
dans lequel l'air est immédiatement disponible à proximité de la flamme au cours du processus de combustion de façon à agir en tant que dissipateur thermique, en diluant le processus de combustion et en poursuivant une réaction de post-flamme en tant que réaction à mélange pauvre, dans lequel le flux de carburant est injecté avec une épaisseur telle que le carburant brûle dans la chambre de combustion (7, 417) selon un rapport stoechiométrique carburant / air, ou proche de celui-ci, en tant que flamme de diffusion avec un rapport élevé surface sur volume ;
**caractérisé en ce que** les flux de carburant et d'air sont injectés de telle sorte que, lorsqu'ils quittent le brûleur (1, 101, 201, 301, 401), le rapport de la vitesse du flux d'air sur la vitesse du flux de carburant, soit supérieur à l'unité.

**2.** Procédé selon la revendication 1, dans lequel aucune partie du flux de carburant qui sort du brûleur (1, 101, 201, 301, 401) ne se situe, approximativement, à plus de 2,5 mm d'une frontière entre le flux de carburant et le flux d'air.

**3.** Procédé selon la revendication 1, dans lequel le carburant est injecté de telle sorte que la distance à partir d'une ligne centrale d'un flux de carburant gazeux jusqu'à une frontière entre le flux de carburant et le flux d'air, se situe dans une plage comprise entre 0,5 mm approximativement et 5 mm approximativement.

**4.** Procédé selon la revendication 1, dans lequel le carburant est injecté de telle sorte que la distance à partir d'une ligne centrale d'un flux de carburant gazeux jusqu'à une frontière entre le flux de carburant et le flux d'air, se situe dans une plage comprise entre 0,5 mm approximativement et 3 mm approximativement.

**5.** Procédé selon la revendication 1, dans lequel le carburant est injecté de telle sorte que la distance à partir d'une ligne centrale d'un flux de carburant liquide jusqu'à une frontière entre le flux de carburant et le flux d'air, se situe dans une plage comprise entre 0,2 mm approximativement et 0,5 mm approximativement.

**FIG. 1A**

**FIG. 1B**

**FIG. 2**

*FIG. 3*

*FIG. 8*

*FIG. 4A*

*FIG. 4B*

*FIG. 5A*

*FIG. 5B*

**FIG. 6**

114a

108/112

305

301

18b

105

304

114b

305

**FIG. 6**

420

412

402

414a

404

405

417

414b

412

414a

7B

401

414b

402

404

414b

408

412

420

418

**FIG. 7A**

**FIG. 7B**

**FIG. 11**

*FIG. 9*

EP 2 171 356 B1

*FIG. 10*

EP 2 171 356 B1

**EP 2 171 356 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6928823 B2
- US 6928823 B